# EUROPÄISCHE PATENTSCHRIFT

(11) **EP 2 760 677 B1**
(45) Veröffentlichungstag und Bekanntmachung des Hinweises auf die Patenterteilung: **13.01.2016**
(21) Anmeldenummer: 12774924.0
(22) Anmeldetag: 20.09.2012
(51) Int. Cl.: B42D 15/00, G02B 5/09, G02B 5/04, B42D 25/29, B42D 25/00

(54) **SICHERHEITSELEMENT MIT EINER OPTISCH VARIABLEN STRUKTUR AUS MIKROSPIEGELN**
SECURITY ELEMENT HAVING AN OPTICALLY VARIABLE STRUCTURE COMPRISING MICRO-MIRRORS
ÉLÉMENT DE SÉCURITÉ DOTÉ D'UNE STRUCTURE OPTIQUEMENT VARIABLE CONSTITUÉE DE MICRO-MIROIRS

(30) Priorität: 30.09.2011 DE 102011114645
(43) Veröffentlichungstag der Anmeldung: 06.08.2014
(73) Patentinhaber: Giesecke & Devrient GmbH, 81677 München (DE)
(72) Erfinder: MAYER, Karlheinz, 88167 Grünenbach (DE); HUYNH, Thanh-Hao, 83052 Bruckmühl (DE); FRANZ, Peter, 85567 Pienzenau/Bruck (DE); ADAMCZYK, Roger, 84432 Hohenpolding (DE); MEINDL, Klaus, 85464 Finsing (DE)
(86) Internationale Anmeldenummer: PCT/EP2012/003940
(87) Internationale Veröffentlichungsnummer: WO 2013/045054

(56) Entgegenhaltungen:
- WO-A1-03/061983
- WO-A2-2006/095161
- WO-A2-2008/008635

## Beschreibung

Die Erfindung betrifft ein Sicherheitselement mit einer optisch variablen Struktur, die eine Vielzahl von Prägeelementen aufweist. Jedes der Prägeelemente besteht aus mindestens zwei Flanken, die in einem bestimmten Winkel und/oder einer bestimmten Richtung aufeinander zulaufen, wobei die Oberfläche der Prägeelemente reflektierend ausgeführt ist. Des Weiteren besteht das Sicherheitselement aus mindestens zwei Gruppen von Prägeelementen, wobei sich die mindestens zwei Gruppen lediglich in dem Winkel und/ oder der Richtung, mit dem bzw. der die Flanken der Prägeelemente aufeinander zulaufen, voneinander unterscheiden. Die Erfindung betrifft weiterhin ein Werkzeug zur Herstellung dieses Sicherheitselements.

Zum Schutz gegen Nachahmung, insbesondere mit Farbkopierern oder anderen Reproduktionsverfahren, werden Wertdokumente, wie beispielsweise Banknoten, Wertpapiere, Kredit- oder Ausweiskarten, Pässe, Urkunden und Ähnliches, Labels, Verpackungen oder andere Elemente für die Produktsicherung mit Sicherheitselementen mit einer optisch variablen Struktur ausgestattet. Der Fälschungsschutz beruht dabei darauf, dass der visuell und einfach und deutlich erkennbare optisch variable Effekt von den oben genannten Reproduktionsgeräten nicht oder nur ungenügend wiedergegeben wird. Insbesondere weisen die Sicherheitselemente eine entsprechende Haptik auf, die schwer zu kopieren, aber leicht und ohne Hilfsmittel zu überprüfen ist.

Aus WO 2010/100360 A1 ist ein gattungsgemäßes Sicherheitselement für Wertdokumente bekannt, bei dem in einer rasterartigen Anordnung von Spiegelflächen der Neigungswinkel einzelner Spiegel in kleinen Schritten variiert wird, so dass bei Veränderung des Betrachtungswinkels für einen Betrachter eine Information mit einem Bewegungseffekt entsteht.

Nachteilig ist hierbei insbesondere, dass der Bewegungseffekt lediglich auf die Darstellung einer einzigen Information beschränkt ist.

Das Dokument WO 03/061983 offenbart ein Sicherheitselement nach der Oberteil des Anspruchs 1.

Der Erfindung liegt deshalb die Aufgabe zugrunde, ein gattungsgemäßes Sicherheitselement bzw. ein Werkzeug zur Herstellung eines gattungsgemäßen Sicherheitselements derart weiterzubilden, dass die Nachteile des Standes der Technik behoben und der Schutz gegenüber Fälschungen weiter erhöht wird.

Diese Aufgabe wird durch die Merkmale der unabhängigen Ansprüche gelöst. Weiterbildungen der Erfindung sind Gegenstand der abhängigen Ansprüche.

Erfindungsgemäß weist die Grundfläche jedes Prägeelements eine regelmäßige sechseckige Geometrie auf.

Das Muster aus Prägeelementen mit einer regelmäßigen sechseckigen und damit wabenförmigen Geometrie hat den besonderen Vorteil, dass mehrere Prägeinformationen kontrastreich ineinander geschachtelt werden können, da hier die Prägefläche vollständig mit Prägeelementen versehen ist, ohne dass Zwischenräume zwischen den Prägeelementen übrig bleiben. Es wird also keine Fläche durch Leeranteile verschenkt. Dies ist besonders bevorzugt dann der Fall, wenn die Grundfläche aller Prägeelemente gleich groß ist.

Trotzdem ist es selbstverständlich möglich, dass die Prägeelemente geringfügig voneinander beabstandet sind. Ein geringfügiger Abstand ist im Sinne dieser Erfindung ein Abstand, der kleiner als die lateralen Abmessungen eines Prägeelements ist. Zwischen den jeweiligen Prägeelementen sind dabei kurze Abschnitte auf Plattenniveau bzw. in der Ebene des unverprägten Substrats angeordnet.

Als Grundfläche eines Prägeelements wird im Sinne dieser Erfindung die Fläche des Prägeelements verstanden, die sich bei senkrechter Projektion des Prägeelements auf das Substrat ergibt, in das das Prägeelement eingeprägt ist. Diejenigen Flächen, die wesentlich für das Reflexionsverhalten des Prägeelements sind und die in dem oben genannten bestimmten Winkel aufeinander zulaufen, werden als Flanken bezeichnet. Alle übrigen Flächen werden, sofern vorhanden, als Seitenflächen bezeichnet.

Der Begriff "wabenförmiges Prägeelement" ist in den bisherigen und den folgenden Ausführungen gleichzusetzen mit dem Begriff "Prägeelement mit einer regelmäßigen sechseckigen Grundfläche", wobei diese Begriffe synonym verwendet werden können.

Eine Wabe und damit auch die Grundfläche des wabenförmigen Prägeelements weist bekanntlich eine Punktsymmetrie auf, so dass eine Ausrichtung der Spiegelflächen in allen Richtungen möglich ist. So können sowohl Effekte erzeugt werden, die beim Auf- und Abkippen des Sicherheitselements erscheinen, als auch Effekte, die beim Drehen des Sicherheitselements auftreten. Auf diese Weise lassen sich verschiedenste Bewegungseffekte darstellen.

Ein Werkzeug zur Herstellung derartiger Sicherheitselemente bzw. Prägeelemente ist beispielsweise eine Druckplatte, insbesondere eine Stichtiefdruckplatte, oder eine Prägeplatte, insbesondere eine blindprägende Stichtiefdruckplatte. Eine blindprägende Stichtiefdruckplatte ist hierbei eine Stichtiefdruckplatte, deren Vertiefungen nicht mit Farbe gefüllt sind, so dass das Substrat lediglich verprägt, jedoch nicht an seiner Oberfläche mit einer Farbe beaufschlagt wird.

Die Herstellung der erfindungsgemäßen Prägeelemente ist besonders bevorzugt mit dem Einsatz der sogenannten direkten Lasergravur in Metall möglich, bei der entsprechende Vertiefungen direkt in eine metallische Master-Prägeplatte mittels Laserstrahlung eingebracht werden. Diese so produzierte, mit weiteren Elementen und/ oder anderen Fertigungsschritten, wie z.B. mechanischer Gravur, versehene Master-Prägeplatte kann dann über weitere galvanische Prozessschritte vervielfältigt werden, wobei als letzter Schritt eine Stichtiefdruckplatte produziert wird. Abschließend wird die Prägeplatte während des Prägevorgangs gegen ein Substrat gepresst, so dass sich das Substrat entsprechend verformt und die Prägeelemente in das Substrat eingeprägt werden. Besonders bevorzugt werden die Prägeelemente mit einem Stichtiefdruckverfahren erzeugt.

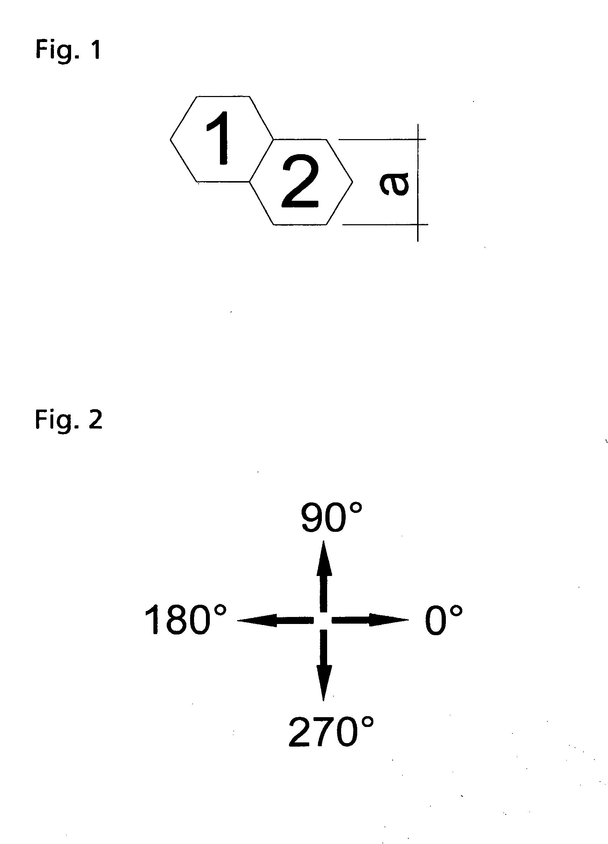

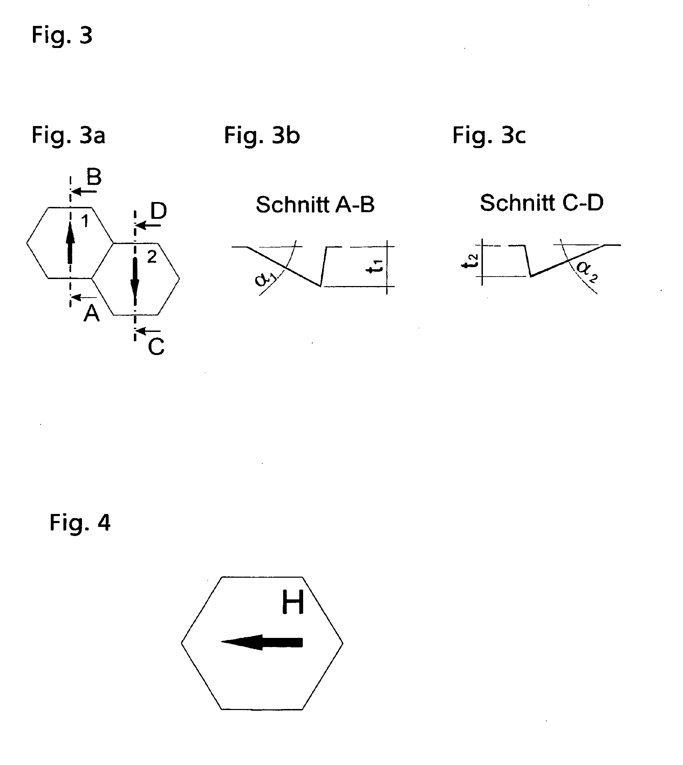

Statt erhabener Prägeelemente sind selbstverständlich auch vertiefte Prägeelemente möglich. Hierbei ragen die Prägeelemente nicht aus der Ebene der Substratoberfläche heraus, sondern bilden Vertiefungen in der Substratoberfläche, die Prägeelemente ragen somit in das Substrat hinein. Eine entsprechende Prägeplatte kann in diesem Fall jedoch nicht Erhöhungen gegenüber dem Prägeplattenniveau aufweisen, da diese den Wischvorgang beispielsweise mittels einer Rakel beeinträchtigen würden. Vielmehr müssen in diesem Fall die Erhöhungen in einem vertieften bzw. abgesenkten Bereich der Prägeplatte eingebracht werden, derart, dass die Erhöhungen nicht über das Prägeplattenniveau herausragen. Diese Strukturen entsprechen somit Strukturen, wie sie beispielsweise aus WO 2010/075979 A1 bekannt sind. So zeigt Fig. 2 der WO 2010/075979 A1 ein entsprechend geprägtes Substrat und Fig. 3 eine Prägeplatte zur Erzeugung von Prägestrukturen der Fig. 2.

Durch die steileren Flanken, die mit der Lasergravur im Vergleich zu anderen Gravurverfahren erzeugt werden können, bietet sich die Möglichkeit, Prägeelemente in hoher Auflösung zu fertigen, wobei die Länge eines Prägeelements, d.h. die Abmessung von seiner Unterkante bis zu seiner Oberkante, 10 µm bis 2000 µm, bevorzugt 30 µm bis 500 µm und besonders bevorzugt 50 µm bis 300 µm beträgt.

Bevorzugt erfolgt die Lasergravur mittels eines Ultra-Kurzpulslasers, der Laserpulse mit einer Dauer im Bereich von Pikosekunden oder Femtosekunden abgibt. Besonders bevorzugt wird ein Pikosekunden- bzw. ps-Laser verwendet, der Laserpulse mit einer Dauer im Bereich von Pikosekunden abgibt.

Bevorzugt besteht ein Sicherheitselement aus einem Grundelement, das mehrfach wiederholt nebeneinander angeordnet ist, so dass sich eine flächige Anordnung aus einer Vielzahl von Grundelementen ergibt. Jedes Grundelement enthält mindestens zwei Waben mit mindestens zwei Informationen, wobei bei jeder dieser Waben die Spiegelflächen unterschiedlich ausgerichtet sind. Bevorzugt besteht ein Grundelement aus zwei bis sechs Waben mit zwei bis sechs Informationen. Die Umrissform dieser flächigen Anordnung aus einer Vielzahl von Grundelementen kann beliebig ausgeführt sein und beispielsweise drei-, vier- oder vieleckig ausgeführt sein oder die Form einer graphischen Abbildung annehmen.

Besonderer Vorteil des erfindungsgemäßen Sicherheitselements ist es, eine Prägestruktur zu schaffen, die mindestens zwei Informationen enthält, die in unterschiedlichen Betrachtungswinkeln erscheinen.

Weiterer besonderer Vorteil des erfindungsgemäßen Sicherheitselements ist, dass nicht nur zwei, sondern auch drei oder mehr Informationen mit bestmöglichem Kontrast dargestellt werden können.

Die Oberfläche der Prägeelemente ist besonders bevorzugt mit einer reflektierenden oder metallischen oder metallisch reflektierenden Beschichtung versehen, so dass die Oberfläche das auftreffende Licht nahezu spiegelnd reflektiert. Diese Beschichtung, die auf das Substrat des Sicherheitselements vor oder nach der Verprägung mit den Prägeelementen aufgebracht sein kann, ist bevorzugt wie folgt ausgeführt:
- als eine metallische oder metallisch anmutende Siebdruckfarbe,
- als eine Farbe mit optisch variablen Pigmenten, bevorzugt sogenannten OVI-Pigmenten,
- als eine Farbe mit optisch variablen Pigmenten, die zusätzlich magnetisch ausrichtbar sind, bevorzugt sogenannte OVMI-Pigmente,
- als eine Farbe mit optisch variablen Iriodin-Pigmenten z.B. der Fa. Bayer, die im Flexodruck oder Siebdruck aufgebracht ist und bevorzugt mit einem im Offsetdruck aufgebrachten Untergrund kombiniert ist,
- als eine Folie in Form eines Streifens oder Patches, die auf das Substrat appliziert ist,
- als glänzende Offsetfarbe, die bevorzugt eine metallisch glänzende Oberfläche aufweist,
- als glänzende Stichtiefdruckfarbe, die bevorzugt einen schwarzen Farbton aufweist oder farblos ist oder auch eine metallisch glänzende Anmutung aufweisen kann, wie beispielsweise Gold oder Silber.

Besonders bevorzugt werden das Verprägen und das Bedrucken des Substrats in einem Arbeitsgang durchgeführt, indem beispielsweise ein farbführender Stichtiefdruck verwendet wird. Hierbei sind die Vertiefungen einer Stichtiefdruckplatte mindestens teilweise mit einer oder mehreren verschiedenen Farben gefüllt, so dass beim Bedrucken des Bedruckstoffes der Bedruckstoff nicht nur verformt bzw. verprägt, sondern auch mit Farbe beaufschlagt wird.

Das Substrat umfasst vorzugsweise Papier und/ oder eine Folie, insbesondere eine transluzente Folie. Im einfachsten Fall besteht das Substrat vollständig entweder aus Papier oder aus Kunststoff. Das Substrat kann jedoch auch bereichsweise aus verschiedenen Materialien bestehen, und insbesondere in einem Bereich aus Papier und zugleich in einem anderen Bereich aus Kunststoff, vorzugsweise aus einer transluzenten Folie, bestehen. Dadurch ist es möglich, verschiedene Materialien als Substrat in einem Arbeitsgang zu verprägen. Unter transluzenter Folie wird hierbei entweder eine transparente oder eine semitransparente Folie verstanden, beispielsweise eine lasierende Folie, welche beispielsweise Polyamid, Polyester, Polyethylen oder biaxial orientiertes Polypropylen (BOPP) enthält.

Gemäß einer bevorzugten Ausführungsform sind die Prägeelemente in eine transluzente Folie eingebracht. Diese transluzente Folie kann beispielsweise eine Öffnung in einem opaken Wertdokument mindestens teilweise abdecken.

Gemäß einer bevorzugten Ausführungsform ist zumindest ein Teil der nicht linienförmigen Prägeelemente taktil erfassbar ausgestaltet, so dass der Betrachter sie nicht nur optisch erkennen, sondern auch beispielsweise mit den Fingerkuppen erfühlen kann.

Das erfindungsgemäße Sicherheitselement kann selbstverständlich mit anderen aus dem Stand der Technik bekannten Sicherheitsmerkmalen kombiniert werden, wodurch der Schutz gegenüber Fälschungen weiter erhöht wird. Beispielsweise können zumindest Teilbereiche des erfindungsgemäßen Sicherheitselements mit einem Sicherheitselement gemäß EP 1317346 B1, WO 97/17211 A1 oder WO 02/20280 A1 kombiniert werden.

Anhand der nachfolgenden Beispiele und ergänzenden Figuren werden die Vorteile der Erfindung erläutert. Die beschriebenen Einzelmerkmale und nachfolgend beschriebenen Ausführungsbeispiele sind für sich genommen erfinderisch, aber auch in Kombination erfinderisch. Die Beispiele stellen bevorzugte Ausführungsformen dar, auf die jedoch die Erfindung in keinerlei Weise beschränkt sein soll. Die in den Figuren gezeigten Proportionen entsprechen nicht den in der Realität vorliegenden Verhältnissen und dienen ausschließlich zur Verbesserung der Anschaulichkeit.

Im Einzelnen zeigen schematisch:
- Fig. 1: zwei erfindungsgemäße wabenförmige Prägeelemente in Draufsicht,
- Fig. 2: die Definition der Spiegelrichtung,
- Fig. 3: ein Ausführungsbeispiel für zwei erfindungsgemäße wabenförmige Prägeelemente in Draufsicht gemäß Fig. 1,
- Fig. 4: ein Ausführungsbeispiel einer Hintergrundwabe H,
- Fig. 5: ein Ausführungsbeispiel mit einer rechteckigen Umrissform,
- Fig. 6: ein Ausführungsbeispiel mit einer Umrissform in Form einer Freiform,
- Fig. 7: eine beispielhafte Umsetzung mit den zwei Informationen A und B,
- Fig. 8: ein Ausführungsbeispiel mit drei Informationen,
- Fig. 9: ein Ausführungsbeispiel mit sechs Informationen,
- Fig. 10: ein konkretes Ausführungsbeispiel für die Ausrichtung der Spiegelflächen bei sechs Informationen gemäß Fig. 9,
- Fig. 11: ein weiteres konkretes Ausführungsbeispiel für die Ausrichtung der Spiegelflächen bei sechs Informationen gemäß Fig. 9,
- Fig. 12: ein Ausführungsbeispiel mit einer gewölbten Anmutung eines Buchstabens A
- Fig. 13: zwei Ausführungsbeispiele für eine Druckplatte zur Erzeugung erfindungsgemäßer Prägeelemente (oben) sowie jeweils ein mit dieser Druckplatte verprägtes Substrat (unten),
- Fig. 14: ein Ausführungsbeispiel für ein erfindungsgemäßes wabenförmiges Prägeelement, das als Vertiefung im Substrat ausgeführt ist, in schräger Draufsicht.

Fig. 1 zeigt ein Ausführungsbeispiel, bei dem dem wabenförmigen Prägeelement mit der Nummer 1 eine Information 1 und dem wabenförmigen Prägeelement mit der Nummer 2 eine Information 2 zugeordnet ist.

Die Länge a eines wabenförmigen Prägeelements, das mittels Stichtiefdruck in ein Substrat aus Papier eingeprägt wird, beträgt zwischen 10 µm und 2000 µm, bevorzugt zwischen 30 µm und 500 µm und besonders bevorzugt zwischen 50 µm und 300 µm.

Jedes wabenförmige Prägeelement ist als in eine bestimmte Richtung verkippte Spiegelfläche ausgeführt, die Licht aus einer Richtung reflektiert. Je Information wird eine andere Richtung gewählt, so dass die Prägeelemente einer ersten Information Licht aus einer anderen Richtung reflektieren als die Prägeelemente einer zweiten bis n-ten Information. Wabenförmige Prägeelemente, die keiner bestimmten Information zugeordnet sind, werden als Hintergrundwaben H bezeichnet und erhalten alle eine gemeinsame Spiegelrichtung, werden als Originaloberfläche ungraviert belassen bzw. weisen keine Verprägung auf oder zeigen einen Winkelverlauf, der als Wölbung wahrgenommen wird.

Im Folgenden werden die Spiegelrichtungen gemäß Fig. 2 mit Pfeilen symbolisiert, die im Gegenuhrzeigersinn von der Waagrechten aus umlaufen. Der mit 0° bezeichnete waagrechte Pfeil nach rechts bedeutet hierbei eine Spiegelfläche, deren Flächennormale nach rechts um einen Spiegelwinkel α verkippt ist bezogen auf eine Flächennormale, die senkrecht auf der Oberfläche der Prägeplatte steht. Diese Spiegelfläche weist somit an ihrer rechten Seite eine größere Tiefe gegenüber der Prägeplattenoberfläche auf als ihre linke Seite. Der mit 90° bezeichnete senkrechte Pfeil nach oben bedeutet eine Spiegelfläche, deren Flächennormale nach oben um einen Spiegelwinkel α verkippt ist bezogen auf eine Flächennormale, die senkrecht auf der Oberfläche der Prägeplatte steht. Diese Spiegelfläche weist somit an ihrer oberen Seite eine größere Tiefe gegenüber der Prägeplattenoberfläche auf als ihre untere Seite. Die Pfeile, die mit 180° bzw. 270° bezeichnet sind, bedeuten Spiegelflächen, die gegenüber den mit 0° bzw. 90° bezeichneten Pfeilen in die jeweils andere Richtung verkippt sind.

Die Bezeichnung "unten" bzw. "oben", "Unterseite" bzw. "Oberseite" und "unterer Bereich" und "oberer Bereich" der Prägeelemente ist hier und im Folgenden bezogen auf die schematische Darstellung der Prägeelemente in den Figuren. Beispielsweise bezeichnet die Unterseite bzw. der untere Bereich eines Prägeelements somit nicht die Seite, die der Prägeplatte zugewandt ist, in das das Prägeelement eingeprägt ist, sondern eine bestimmte Seite des Prägeelements bezogen auf die schematische Darstellung. Statt der Bezeichnung "Unterseite" könnte alternativ auch die Bezeichnung "südliche" Seite oder statt der Bezeichnung "Oberseite" die Bezeichnung "nördliche" Seite verwendet werden.

Winkelangaben, die innerhalb eines wabenförmigen Prägeelements angegeben sind, beziehen sich nicht auf die Richtung der Verkippung der Spiegelflächen, sondern auf den Spiegelwinkel α, um den die Spiegelflächen gegenüber der Prägeplattenoberfläche verkippt sind.

Fig. 3 zeigt in Fig. 3a ein Beispiel für eine Spiegelanordnung, bei der ein wabenförmiges Prägeelement 1 mit der Information 1 eine Spiegelrichtung von 90°, einen Spiegelwinkel α₁ und eine Tiefe ti aufweist. Der Spiegelwinkel ist hierbei auf die Ebene der Prägeplattenoberfläche bezogen, in die die Prägeelemente eingeprägt sind, wobei ein Spiegelwinkel von 0° ein unverprägtes Substrat bzw. einen Spiegel bedeutet, dessen Spiegelebene parallel zur Ebene der Prägeplattenoberfläche ausgerichtet ist. Das wabenförmige Prägeelement 2 mit einer Information 2 hat eine Spiegelrichtung von 270°, einen Spiegelwinkel α₂ und eine Tiefe t₂. Die Tiefe kann bei Herstellung mittels Stichtiefdruck zwischen 0 µm und 350 µm variiert werden, bevorzugt im Bereich 10 µm bis 120 µm. Abhängig von der Länge a der Prägestruktur ergibt sich daraus ein bestimmter Spiegelwinkel α. Der Spiegelwinkel α variiert zwischen 0° und 80°, bevorzugt zwischen 10° und 70°.

Fig. 3b und Fig. 3c zeigen eine Schnittdarstellung entlang der in Fig. 3a mit A-B und C-D bezeichneten Schnittlinien der Prägeplatte. Der Kontrast der Information hängt hierbei unter Anderem von der Steilheit der Rücksprungflanke ab, d.h. von dem Neigungswinkel der in Fig. 3b rechts und in Fig. 3c links dargestellten Flanke. Je steiler die Rücksprungflanke ist und je näher sie damit einem Winkel von 90° kommt, umso kontrastreicher zeichnet sich die Information ab. Die vertieften Strukturen der Prägeplatte ergeben nach der Prägung entsprechend erhabene Spiegelflächen im Substrat, wobei ein vom Substrat abhängiger Verlust an Prägehöhe entsteht.

Besonders bevorzugt werden die erfindungsgemäßen Prägeelemente mit einer Prägeplatte, wie beispielsweise eine Stichtiefdruckplatte, hergestellt, in die die entsprechenden Vertiefungen mit einem Ultra-Kurzpulslaser bzw. Pikosekunden- oder ps-Laser eingebracht werden, wobei der ps-Laser Laserpulse mit einer Dauer im Bereich von Pikosekunden abgibt. Erst mit dem Einsatz des ps-Lasers werden Flankenwinkel von mehr als 60° stabil bzw. reproduzierbar und in hoher Auflösung ohne Nachbearbeitung herstellbar. Selbstverständlich müssen die Steilheit der Flanken und die Gravurtiefe an die Möglichkeiten des verwendeten Substrats angepasst werden, damit dieses weder unzulässig geschwächt noch verletzt wie beispielsweise eingerissen oder eingeschnitten wird. Die Strukturen können alternativ auch mit einem Nanosekunden- bzw. ns-Laser hergestellt werden, allerdings ist dann eine Nachbearbeitung der Gravur durch Ätzen, Elektropolieren, Bestrahlen mit CO₂-Schnee oder mechanisches Polieren erforderlich.

Fig. 4 zeigt ein Ausführungsbeispiel einer Hintergrundwabe H. Derartige Hintergrundwaben H umgeben beispielsweise die Prägeelemente 1 mit der Information 1 und die Prägeelemente 2 mit der Information 2. In diesem Ausführungsbeispiel ist die Hintergrundwabe H mit einer Spiegelrichtung von 180° und einem Spiegelwinkel von 20° belegt. Wichtig ist dabei eine gute Kontrastierung der von der Hintergrundwabe H erzeugten Information zu den Informationen 1 und 2 der Waben 1 und 2.

Die definierte Grundzelle wird dann so oft wiederholt, bis eine gewünschte Grundfläche gefüllt ist. Die Umrissform der Grundfläche kann jede gewünschte Form haben, sie kann rechteckig, rund, oval sein oder jede beliebige Freiform annehmen.

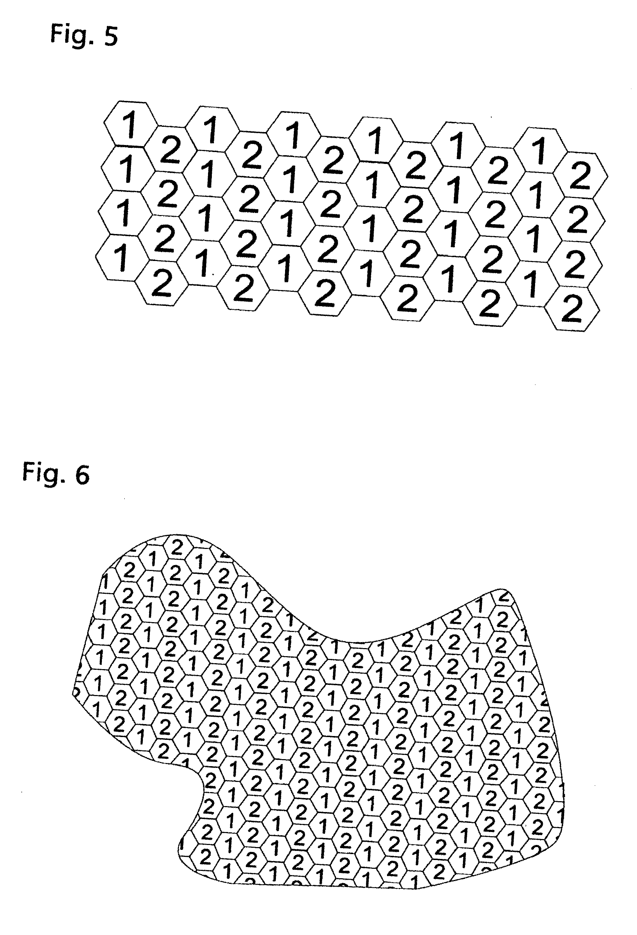

Fig. 5 zeigt hierbei ein Ausführungsbeispiel mit einer rechteckigen Umrissform und Fig. 6 ein Ausführungsbeispiel mit einer Umrissform in Form einer Freiform.

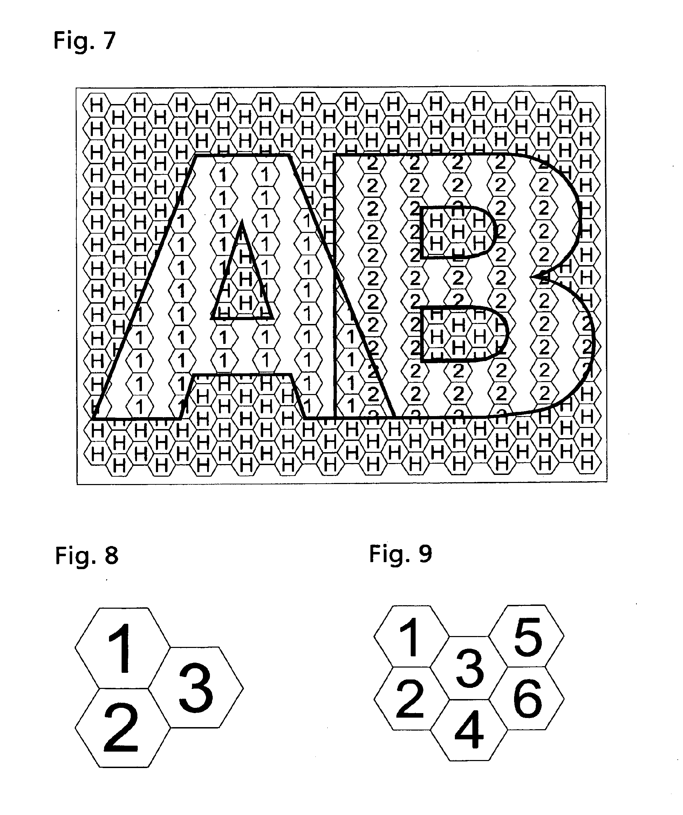

Fig. 7 zeigt eine beispielhafte Umsetzung mit den zwei Informationen A und B. Die Fläche mit der Information A wird mit wabenförmigen Prägeelementen von Typ 1 gefüllt, die Fläche mit der Information B mit wabenförmigen Prägeelementen vom Typ 2. Die Flächen, die keiner der beiden Informationen A oder B angehören, werden mit den Hintergrundwaben vom Typ H gefüllt. Ist die Grundzelle entsprechend Fig. 3 ausgeführt, erscheinen Information A und B abwechselnd beim Auf- und Abkippen des Sicherheitselements.

Die nicht mit Prägeelementen gefüllten Bereiche innerhalb der zwei Informationen A und B können beispielsweise
- keine Prägeelemente aufweisen oder
- mit Prägeelement vom Typ 1 bzw. vom Typ 2 gefüllt werden, so dass sich eine weitere Kontrasterhöhung zwischen den beiden Informationen ergibt oder
- mit Hintergrundwaben vom Typ H gefüllt werden, so dass sich ein gleichmäßigeres Erscheinungsbild ergibt.

Es können jedoch auch mehr als zwei Informationen in der Prägestruktur integriert werden. Fig. 8 zeigt ein Ausführungsbeispiel mit drei Informationen und Fig. 9 ein Ausführungsbeispiel mit sechs Informationen.

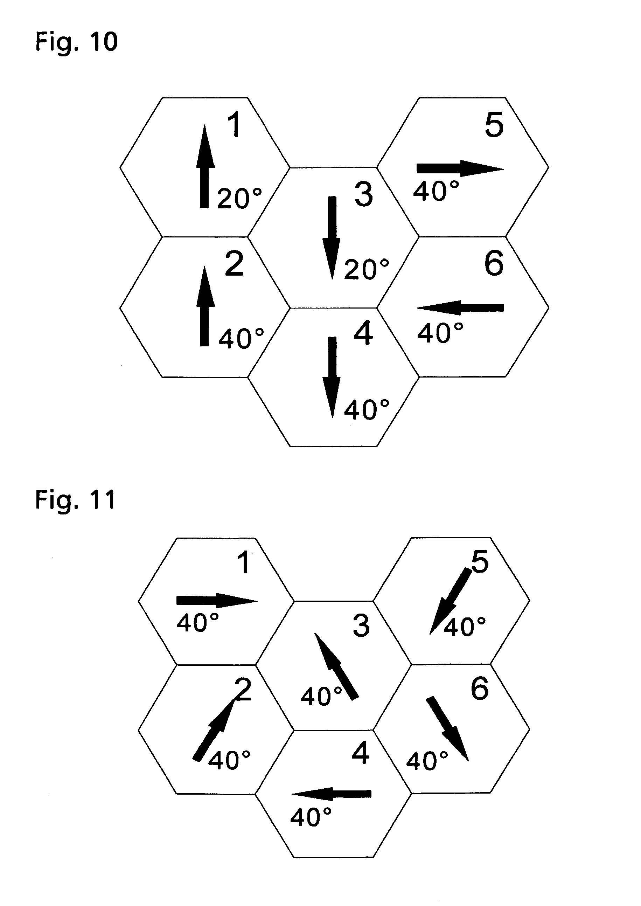

Fig. 10 und Fig. 11 zeigen konkrete Ausführungsbeispiele für die Ausrichtung der Spiegelflächen bei sechs Informationen gemäß Fig. 9.

Bei dem in Fig. 10 gezeigten Ausführungsbeispiel stellen die Informationen 1 bis 4 beispielsweise einen Bewegungseffekt dar, bei dem durch Auf- und Abwärtskippen nacheinander die einzelnen Objekte des Bewegungseffektes sichtbar werden. Dreht man das Sicherheitselement um 90° nach rechts oder links, wird die Information 5 oder 6 sichtbar.

Bei dem in Fig. 11 gezeigten Ausführungsbeispiel wechseln die einzelnen Informationen beim Drehen des Prägesubstrates um jeweils 60°.

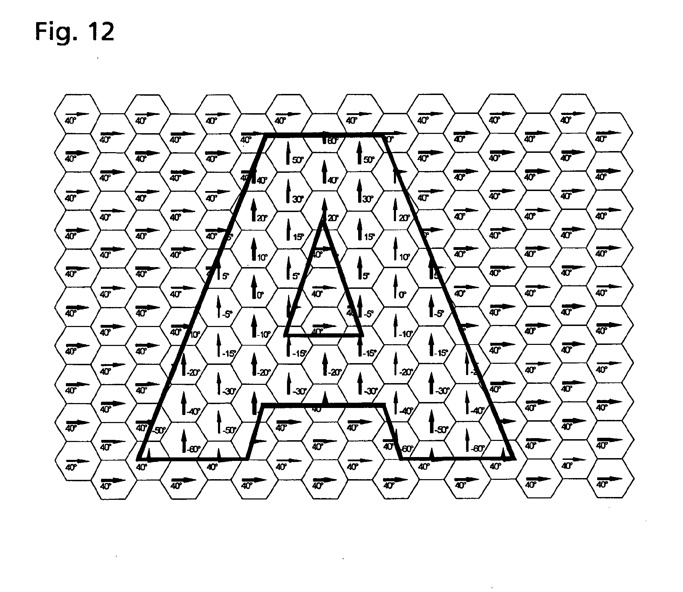

In den bisherigen Beispielen wurde gezeigt, wie mehrere Informationen abwechselnd in die wabenförmigen Prägeelemente verschachtelt werden. Es besteht aber auch die Möglichkeit, innerhalb einer Teilflache, die ein bestimmtes Objekt oder Teilobjekt darstellt, die Spiegelrichtung und/ oder den Spiegelwinkel der wabenförmigen Prägeelemente zu ändern Dies kann auch in kleinen Schritten als Verlauf geschehen, so dass ein gewisser 3D-Effekt entsteht. Man kann innerhalb dieser Teilfläche zwar dann nur eine Information darstellen, erhält dafür eine höhere Brillanz des Effekts. In Fig. 12 ist ein Beispiel mit einer gewölbten Anmutung des Buchstabens A gezeigt. Dieses Ausführungsbeispiel bzw. diese Methode kann auch mit den oben beschriebenen Ausführungsbeispielen bzw. Methoden kombiniert werden. So können außerhalb des Buchstaben A weitere Information in der oben beschriebenen Weise eingebracht werden.

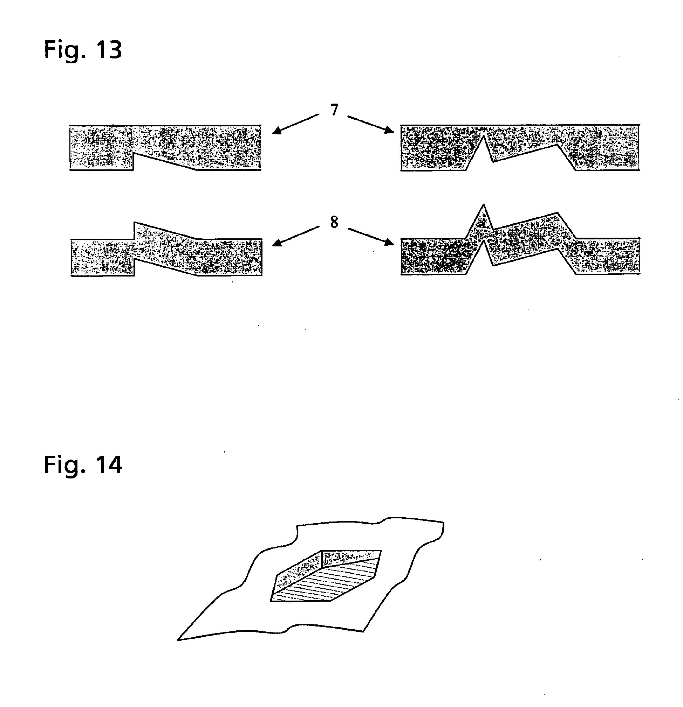

Fig. 13 zeigt zwei Ausführungsbeispiele für eine Druckplatte 7 zur Erzeugung erfindungsgemäßer Prägeelemente sowie jeweils ein mit dieser Druckplatte verprägtes Substrat 8. Die Druckplatten 7 weisen Vertiefungen auf, deren Geometrie und Abmessung mit den Prägestrukturen im Substrat 8 korrespondieren.

Fig. 14 zeigt ein Ausführungsbeispiel für ein erfindungsgemäßes wabenförmiges Prägeelement, das als Vertiefung im Substrat ausgeführt ist, in schräger Draufsicht von rechts vorne. Eine entsprechende Prägeplatte zur Herstellung dieses Prägeelements weist im Gegensatz zu der Prägeplatte aus Fig. 13 Erhöhungen auf, die in einem vertieften bzw. abgesenkten Bereich der Prägeplatte eingebracht sind. Die Erhöhungen dürfen hierbei nicht über das Prägeplattenniveau herausragen, da sie ansonsten den Wischvorgang beeinträchtigen oder durch den Wischvorgang selbst beeinträchtigt bzw. beschädigt würden.

## Patentansprüche

1. Sicherheitselement mit einer optisch variablen Struktur, die eine Vielzahl von Prägeelementen aufweist, wobei jedes der Prägeelemente aus mindestens zwei Flanken besteht, die in einem bestimmten Winkel und/ oder einer bestimmten Richtung aufeinander zulaufen, wobei die Oberfläche der Prägeelemente reflektierend ausgeführt ist, und wobei das Sicherheitselement aus mindestens zwei Gruppen von Prägeelementen besteht, wobei sich die mindestens zwei Gruppen lediglich in dem Winkel und/oder der Richtung, mit dem bzw. der die Flanken der Prägeelemente aufeinander zulaufen, voneinander unterscheiden, **dadurch gekennzeichnet, dass** jedes Prägeelement eine regelmäßige sechseckige Grundfläche aufweist.

2. Sicherheitselement nach Anspruch 1, **dadurch gekennzeichnet, dass** die Grundfläche aller Prägeelemente gleich groß ist.

3. Sicherheitselement nach Anspruch 1 oder 2, **dadurch gekennzeichnet, dass** die Oberfläche der Prägeelemente mit einer reflektierenden bzw. spiegelnden Beschichtung versehen ist, so dass die Oberfläche das auftreffende Licht mindestens nahezu spiegelnd reflektiert.

4. Sicherheitselement nach mindestens einem der vorigen Ansprüche, **dadurch gekennzeichnet, dass** die Oberfläche der Prägeelemente mit einer reflektierenden oder metallischen oder metallisch reflektierenden Beschichtung versehen ist, so dass die Oberfläche das auftreffende Licht nahezu spiegelnd reflektiert.

5. Sicherheitselement nach mindestens einem der vorigen Ansprüche, **dadurch gekennzeichnet, dass** das Sicherheitselement aus einem Grundelement besteht, das mehrfach wiederholt nebeneinander angeordnet ist, so dass sich eine flächige Anordnung aus einer Vielzahl von Grundelementen ergibt, wobei jedes Grundelement mindestens zwei Prägeelemente mit einer regelmäßigen sechseckigen Grundfläche mit mindestens zwei Informationen enthält, wobei bei jedem dieser Prägeelemente die Spiegelflächen unterschiedlich ausgerichtet sind.

6. Sicherheitselement nach Anspruch 5, **dadurch gekennzeichnet, dass** ein Grundelement aus zwei bis sechs Prägeelementen mit zwei bis sechs Informationen besteht.

7. Sicherheitselement nach mindestens einem der vorigen Ansprüche, **dadurch gekennzeichnet, dass** die Prägeelemente des Grundelements, die nicht zu einer der zwei bis sechs Informationen beitragen, mit einem Hintergrund-Prägeelement gefüllt sind, das unterschiedlich ausgerichtet ist wie die Prägelemente des Grundelements.

8. Werkzeug zur Herstellung eines Sicherheitselements nach einem der Ansprüche 1 bis 7, wobei das Werkzeug eine Druck- oder Prägeplatte mit Prägeelementen ist und wobei die Länge eines Prägeelements, d.h. die Abmessung von seiner Unterkante bis zu seiner Oberkante, 10 µm bis 2000 µm, bevorzugt 30 µm bis 500 µm und besonders bevorzugt 50 µm bis 300 µm beträgt.

9. Werkzeug nach Anspruch 8, **dadurch gekennzeichnet, dass** die Prägeplatte statt vertiefter Prägestrukturen erhabene Prägestrukturen aufweist, wobei die erhabenen Prägestrukturen in einem vertieften bzw. abgesenkten Bereich der Prägeplatte eingebracht werden, derart, dass die erhabenen Prägestrukturen nicht über das Prägeplattenniveau herausragen.

## Claims

1. A security element with an optically variable structure having a multiplicity of emboss elements, with each of the emboss elements consisting of at least two flanks which converge at a certain angle and/or in a certain direction, with the surface of the emboss elements being configured to be reflective, and with the security element consisting of at least two groups of emboss elements, with the at least two groups differing from each other only in the angle and/or the direction at or in which the flanks of the emboss elements converge, **characterized in that** each emboss element has a regular hexagonal base.

2. The security element according to claim 1, **characterized in that** the base of all emboss elements is equally large.

3. The security element according to claim 1 or 2, **characterized in that** the surface of the emboss elements is furnished with a reflective or mirroring coating, so that the surface reflects the impinging light at least near-specularly.

4. The security element according to at least one of the above claims, **characterized in that** the surface of the emboss elements is furnished with a reflective or metallic or metallically reflective coating, so that the surface reflects the impinging light near-specularly.

5. The security element according to at least one of the above claims, **characterized in that** the security element consists of a basic element which is arranged side by side in a multiply repeated manner, resulting in an areal arrangement of a multiplicity of basic elements, with each basic element containing at least two emboss elements with a regular hexagonal base with at least two information items, with the mirror faces being aligned differently on each of said emboss elements.

6. The security element according to claim 5, **characterized in that** a basic element consists of two to six emboss elements with two to six information items.

7. The security element according to at least one of the above claims, **characterized in that** the emboss elements of the basic element that do not contribute to one of the two to six information items are filled with a background emboss element which is aligned differently to the emboss elements of the basic element.

8. A tool for manufacturing a security element according to any of claims 1 to 7, wherein the tool is a printing or embossing plate with emboss elements and wherein the length of an emboss element, i.e. the dimension from its lower edge to its upper edge, amounts to 10 µm to 2000 µm, preferably 30 µm to 500 µm, and particularly preferably 50 µm to 300 µm.

9. The tool according to claim 8, **characterized in that** the embossing plate has raised emboss structures instead of depressed emboss structures, with the raised emboss structures being formed in a depressed or depressed region of the embossing plate, such that the raised emboss structures do not protrude beyond the embossing-plate level.

## Revendications

1. Élément de sécurité à structure optiquement variable dotée d'une pluralité d'éléments de gaufrage, chacun des éléments de gaufrage consistant en au moins deux flancs qui convergent l'un vers l'autre dans un angle déterminé et/ou dans une direction déterminée, la surface des éléments de gaufrage étant réalisée sous forme réfléchissante, et l'élément de sécurité consistant en au moins deux groupes d'éléments de gaufrage, les au moins deux groupes différant les uns des autres uniquement par l'angle et/ou la direction dans lequel ou laquelle les flancs des éléments de gaufrage convergent l'un vers l'autre, **caractérisé en ce que** chaque élément de gaufrage comporte une superficie de base hexagonale régulière.

2. Élément de sécurité selon la revendication 1, **caractérisé en ce que** la superficie de base de tous les éléments de gaufrage est de taille égale.

3. Élément de sécurité selon la revendication 1 ou 2, **caractérisé en ce que** la surface des éléments de gaufrage est pourvue d'un revêtement réfléchissant ou bien miroitant, de telle sorte que la surface réfléchit la lumière incidente au moins presque spéculairement.

4. Élément de sécurité selon au moins une des revendications précédentes, **caractérisé en ce que** la surface des éléments de gaufrage est pourvue d'un revêtement réfléchissant ou métallique ou métallique réfléchissant, de telle sorte que la surface réfléchit la lumière incidente presque spéculairement.

5. Élément de sécurité selon au moins une des revendications précédentes, **caractérisé en ce que** l'élément de sécurité consiste en un élément de base qui est agencé l'un à côté de l'autre de manière plusieurs fois répétitive, de telle sorte qu'un agencement étendu est engendré par une pluralité d'éléments de base, chaque élément de base contenant au moins deux éléments de gaufrage ayant une superficie de base hexagonale régulière comportant au moins deux informations, cependant que, dans le cas de chacun de ces éléments de gaufrage, les surfaces spéculaires peuvent être orientées différemment.

6. Élément de sécurité selon la revendication 5, **caractérisé en ce qu'**un élément de base consiste en de deux à six éléments de gaufrage comportant de deux à six informations.

7. Élément de sécurité selon au moins une des revendications précédentes, **caractérisé en ce que** les éléments de gaufrage de l'élément de base qui ne contribuent pas à une des deux à six informations sont comblés avec un élément de gaufrage de fond qui est orienté différemment des éléments de gaufrage de l'élément de base.

8. Outil de fabrication d'un élément de sécurité selon une des revendications de 1 à 7, l'outil étant une plaque d'impression ou de gaufrage dotée d'éléments de gaufrage, et la longueur d'un élément de gaufrage, c'est à dire la dimension de son bord inférieur à son bord supérieur étant de 10 µm à 2000 µm, de préférence de 30 µm à 500 µm, et particulièrement de préférence de 50 µm à 300 µm.

9. Outil selon la revendication 8, **caractérisé en ce que** la plaque de gaufrage comporte, au lieu de structures de gaufrage renfoncées, des structures de gaufrage en saillie, les structures de gaufrage en saillie étant pratiquées dans une zone renfoncée ou abaissée de la plaque de gaufrage, de telle sorte que les structures de gaufrage en saillie ne dépassent pas le niveau de la plaque de gaufrage.
